## Europäisches Patentamt
## European Patent Office
## Office européen des brevets

(19)

(11) Publication number: **0 023 836**
**B1**

(12) **EUROPEAN PATENT SPECIFICATION**

(45) Date of publication of patent specification: **11.07.84**

(51) Int. Cl.³: **B 60 Q 9/00, G 01 P 3/56, F 16 D 23/10**

(21) Application number: **80302663.2**

(22) Date of filing: **04.08.80**

(54) **Change-speed transmission systems; engine-transmission assemblies incorporating such transmission systems.**

(30) Priority: **03.08.79 US 63212**

(43) Date of publication of application:
**11.02.81 Bulletin 81/6**

(45) Publication of the grant of the patent:
**11.07.84 Bulletin 84/28**

(84) Designated Contracting States:
**AT BE CH DE FR GB IT LI LU NL SE**

(56) References cited:
**DE - B - 1 224 964**
**FR - A - 2 349 064**
**GB - A - 943 514**
**US - A - 3 809 956**

(73) Proprietor: **THE GARRETT CORPORATION**
**9851-9951 Sepulveda Boulevard P.O. Box 92248**
**Los Angeles, California 90009 (US)**

(72) Inventor: **Olivier, Paul D.**
**4851 East Fanfol**
**Scottsdale Arizona (US)**

(74) Representative: **Taylor, Duncan Alistair et al,**
**KILBURN & STRODE 30 John Street**
**London WC1N 2DD (GB)**

Courier Press, Leamington Spa, England.

## Description

Field of the Invention

This invention relates to change-speed transmission systems in which the speed-changing operations are under the direct control of an operator, such as the driver of a road vehicle. It is particularly but not exclusively applicable to transmission systems incorporating non-synchromesh gearboxes, such as are widely used on heavy lorries.

The Prior Art

Normally, a heavy lorry is driven by a diesel engine, driving through a foot-controlled clutch and a multi-speed, non-synchromesh transmission controlled manually by the driver of the lorry. The transmission may provide as many as fifteen gear ratios. It will be appreciated that, while theoretically it might be desirable to provide a synchromesh mechanism for each gear ratio, in order to help in achieving smooth gear changes and avoiding damage to the gearbox, in practice the increase in cost and complexity and the reduction in reliability which would result from providing such synchromesh mechanisms outweigh the advantages to be obtained; thus non-synchromesh gearboxes are the norm in this application.

When changing gear with a non-synchromesh gearbox, "double declutching" is normally required. That is to say, the clutch is first disengaged while the gearbox is shifted from the previous gear into neutral. The clutch is then temporarily re-engaged, so that the gearbox input shaft is forced to run at the same speed as the engine. The driver of the vehicle can then, by use of the accelerator, vary the speed of the gearbox input shaft. On the basis of the experience, the driver can tell when the input shaft speed is approximately correct for changing into the next gear; the main source of feedback for making this judgement is the sound of the engine. When the driver judges that the gearbox input shaft speed is correct, the clutch is again disengaged, after which the appropriate gear is engaged, and the clutch again re-engaged.

An extra source of information which may be helpful to the driver in changing gear is a tachometer or engine speed indicator, but the extra help provided by such an indicator is relatively limited.

In Fabre's French Specification No. 2349064 an arrangement is disclosed in which an electrical signal representative of the speed of the output shaft of a gearbox is fed to a voltage divider for providing four signals representing that output speed geared up by the different available ratios in the gearbox; in four different comparators those signals are compared with an electrical signal representative of the input shaft speed and if in any case a null signal results, then a lamp is illuminated indicating that the shaft speeds are appropriate for engagement of the particular gear identified by that lamp. There is also a reference to the use of a pointer in association with the lamps for indicating under certain conditions the difference between the actual input shaft speed and the input shaft speed corresponding to synchronism with the nearest available gear ratio.

According to the present invention, a device is arranged to receive sensed input and output shaft speed signals and to derive from these signals a signal representative of the ratio of the sensed speeds, and an operator-intelligible output device receives the derived signal and provides to the operator a continuous indication of the relationship between the ratio of the sensed speeds and the gear ratios available in the change-speed gearbox for all operational speeds of the output shaft.

Whereas Fabre only gives an indication of a particular available gear ratio when synchronism is achieved, and under certain conditions gives an error signal before synchronism is achieved, the present invention gives the operator a most useful continuous indication not only of the amount by which he is off synchronism, but also an indication of the sense in which the engine speed has to be increased or decreased to achieve synchronism at the nearest ratio.

In one possible embodiment, the output device provides the said indication to the operator in an analogue form. For example, the output device may have a pointer whose position indicates the ratio of the sensed speeds, and which moves over a scale having a mark at each of the positions corresponding to the available gear ratios. Thus, when changing gear, the driver of a vehicle equipped with such a transmission system receives a clear indication as to when the gearbox input shaft speed reaches the correct value, in relation to the gearbox output shaft speed, for a smooth change into a particular gear ratio; the correct speed has been reached when the pointer points exactly to the relevant mark on the scale.

Alternatively, the output device may provide the said indication to the operator in a digital form. For example, the said indication provided by the output device comprises a more-significant digit or digits and a less significant digit or digits, and, when the ratio of the sensed speeds is equal to one of the available gear ratios, the more-significant digit or digits identify the relevant gear ratio, while the less-significant digit or digits are zero (or absent), and, when the ratio of the sensed speeds is not equal to any of the available gear ratios, the less-significant digits provide an indication of the difference between the ratio of the sensed speeds and the closest available gear ratios.

Transmission systems embodying the invention may find particular application in conjunction with engines of the free turbine gas turbine type. In such an engine, the sound of the engine does not provide a good guide to the speed of the engine output shaft, so that greater difficulties in changing gear smoothly may arise with this type of engine than with, for example, a diesel engine.

Brief Description of the Drawings

Figure 1 is a schematic representation of one embodiment of the invention; and

Figure 2 is a schematic illustrating a modified embodiment of the invention.

Detailed Description of the Preferred Embodiments

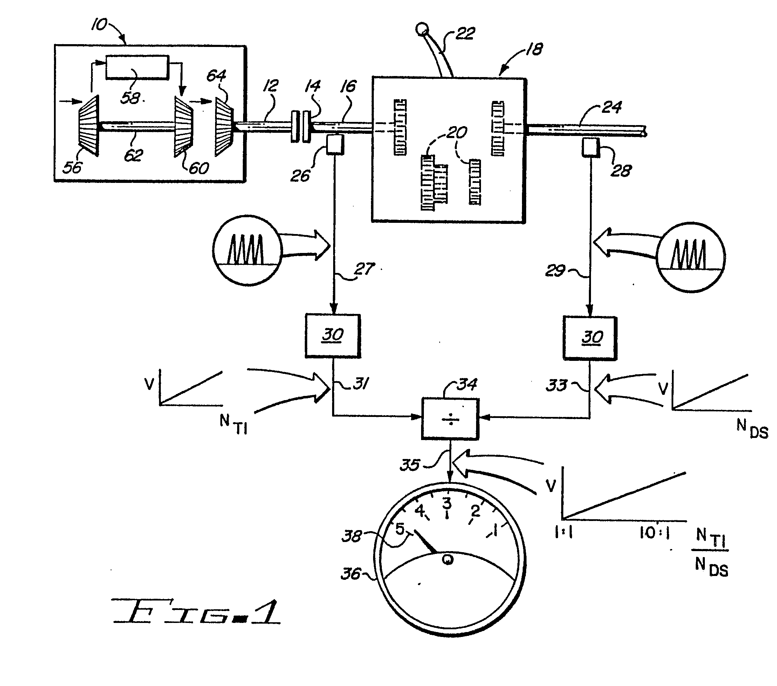

Figure 1 shows a free turbine type gas turbine engine 10, which drives the road wheels of a vehicle, such as a heavy lorry, through a clutch 14 and a change-speed gearbox 18. It should be understood, however, that the invention is also suitable for use with other types of prime mover, such as diesel or Otto cycle engines. The free turbine type engine 10 includes a gas generator section inducing a compressor 56 delivering a pressurized airflow to a continuous combustor 58, with heated exhaust gas flow from the combustor passing through a first turbine or set of turbines 60 which is connected through a shaft 62 to drive the compressor 56. The free turbine engine 10 further includes a free turbine or power turbine section 64 which receives the gas exhausted from the turbine 60; thus the only interaction between the free turbine 64 and the gas generator section is formed by the motive gas flow. An output shaft 12 from the free turbine 64 constitutes the engine output drive shaft. During operation of such a free turbine engine 10, the gas generator section always runs at a relatively high speed and, since it is not mechanically connected with the output drive shaft 12, the relatively quiet, characteristic noise generated by the engine is largely a function of the gas generator section speed, so that it is difficult for the driver of the vehicle to judge the speed of the drive shaft 12. This is particularly troublesome during gear shifting. Thus, while a free turbine engine 10 offers a distinct advantage in that the transmission required needs only a few (three or so) different gear ratios, it is more difficult to shift gears smoothly in a non-synchromesh type transmission with this type of engine.

The engine drive train further includes the foot-controlled clutch 14 which is engageable and disengageable to selectively interconnect the engine drive shaft 12 with an input shaft 16 of the change-speed gearbox 18, which is a manually operated, non-synchromesh type of gearbox. As Figure 1 illustrates diagrammatically, the gearbox 18 has a manual gear shift lever 22, and includes a plurality of gears 20 providing a range of different gear ratios for interconnecting the transmission input shaft 16 with the transmission output shaft 24. The transmission output shaft 24 forms a part of the final drive leading to the vehicle drive wheels.

Electrical pickups in the form of monopole speed sensors 26, 28 are associated with the transmission input shaft 16 and output shaft 24, or gears directly driven thereby, to produce output signals in lines 27 and 29 in the form of pulse trains whose frequencies are indicative of the respective input and output shaft speeds. The input shaft speed signal in the line 27 is processed by a signal conditioner 30, which is a frequency to analogue signal converter, to develop an output signal in a line 31 which is a voltage whose magnitude is indicative of the input shaft speed $N_{TI}$. Similarly, the transmission output shaft speed signal is processed by another frequency to analogue signal converter 32, to develop another voltage signal in a line 33; the magnitude of this voltage signal represents the output shaft speed $N_{DS}$. The signals in the lines 31 and 33 are supplied to an electrical analogue divider 34, so that the output signal from the divider 34 is an analogue voltage signal whose magnitude is indicative of the ratio $N_{TI}/N_{DS}$. Accordingly, the analogue voltage signal on the line 35 is a continuous signal always indicative of the ratio of the actual speed of the gearbox input shaft 16 to the actual speed of the gearbox output shaft 24.

The signal on the line 35 is delivered to a numerical readout device 36 which has indicia 38 thereon in the form of numbers which identify the actual gears which may be selected in the gearbox 18. For instance, the numeral 1 on the readout 36 corresponds to the gear ratio for "first gear". Similarly, the remaining whole numbers 2, 3, 4 . . . up to the highest gear available, are representative of the other different gear ratios available.

Accordingly, the signal on the line 35 drives the indicator of the readout 36 to a location corresponding with the actual ratio between the gearbox input and output shaft speeds. Simply by glancing at the indicator 36, the vehicle driver will therefore be able to know the actual speed ratio, $N_{TI}/N_{DS}$, in direct comparison to the different gear ratios which he has available to select. Thus, when the indicator is between numbers "4" and "5", the driver immediately knows that his transmission speeds are incorrect for shifting, and also knows in which sense to vary the transmission input speed (and/or, in some cases, the output speed) in order to move the indicator closer towards the whole number "5". Once the indicator is at the whole number "5", the driver can operate the gear shift lever 22 to engage "fifth gear".

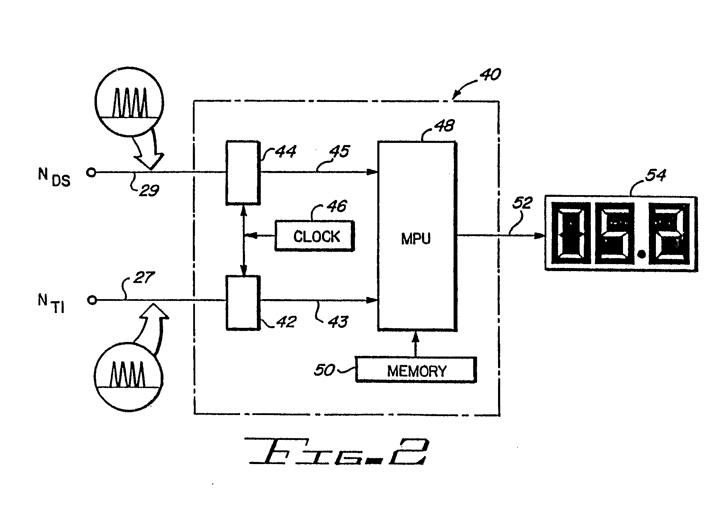

Figure 2 illustrates a modified embodiment of the invention, in which the two pulse train signals in the lines 27 and 29 are delivered to a digital micro-processor unit 40, which performs all the necessary calculations in order to generate an output value which is supplied, as indicated by a line 52, to be displayed on a digital readout 54. Simply for the purposes of explanation the microprocessor unit 40 is illustrated with internal functional boxes 42, 44, 46, 48 and 50. For instance, the two pulse train signals in the lines 27, 29 are delivered to counters 42, 44 which are periodically strobed by a clock 46, and which operate to develop output signals, on lines 43 and 45, in the form of digital numbers representative of the respective input and output shaft speeds. These digital signals are in the form of counts or revolutions per unit time. Having been transformed into a digital form, this information is fed to a micro-processor 48 which also receives input from a read-only memory 50 which contains information regarding the actual gear ratios available within the transmission 18. By properly scaling the input signals, dividing one by the other to determine the actual running ratio of the transmission, and then comparing it to the available gear ratios, as stored in the memory 50, the micro-processor 48 develops an output signal which is indicative of the actual ratios $N_{TI}/N_{DS}$, but in terms of the various gear ratios available. Again, the digital readout shows a whole number, 1, 2, 3 ... up to the highest gear ratio available, whenever the actual running speed ratio $N_{TI}/N_{DS}$ is equal or very nearly equal to one of the gear ratios available. Conversely, when the actual running speed ratio is not exactly equal to one of the available gear ratios, the digital readout 54 displays a fractional part, as indicated by the display "05.2" illustrated in Figure 2, to inform the vehicle driver that he cannot smoothly shift to "fifth gear" at the present moment, and also to tell him that he must slightly decrease the speed of input shaft 16 (or increase vehicle ground speed, as reflected by output shaft 24), in order to shift smoothly into "fifth gear".

Various modifications of the preferred forms of the invention may be made. For instance, while the illustrated readout devices 36 and 54 are in the form of visual displays, any other type of driver-understandable interface may be used. For example, audible signals may be used instead. Furthermore, the signals employed in generating the required output signals need not be electrical signals. The invention may also be applicable in fields, other than ground vehicles, in which non-synchromesh change-speed gearboxes are used.

## Claims

1. A change-speed power transmission system comprising an operator-controlled non-synchromesh change-speed gearbox having input and output shafts, sensors (26, 28) arranged to sense the speeds of the gearbox input and output shafts (16, 24), characterised by a device (34, 40) arranged to receive the sensed-speed signals from the sensors (26, 28), and to derive from these signals a signal representative of the ratio of the sensed speeds, and an operator-intelligible output device (36, 54) receiving the derived signal (over lines 35, 52) and providing to the operator a continuous indication of the relationship between the ratio of the sensed speeds and the gear ratios available in the change-speed gearbox (18) for all operational speeds of said output shaft (24).

2. A system as claimed in Claim 1 in which the indication shows the sensed ratio in relation to all the ratios available in the gearbox (18).

3. A system as claimed in Claim 2 in which the output device (36) comprises a pointer movable in accordance with the sensed ratio over a dial marked (at 38) with all the available gear ratios.

4. A system as claimed in Claim 1, in which the said indication provided by the output device (54) comprises a more-significant digit or digits and a less-significant digit or digits, and, when the ratio of the sensed speeds is equal to one of the available gear ratios, the more-significant digit or digits identify the relevant gear ratio, while the less-significant digit or digits are zero (or absent), and, when the ratio of the sensed speeds is not equal to any of the available gear ratios, the less-significant digits provide an indication of the difference between the ratio of the sensed speeds and the closest available gear ratios.

5. A system as claimed in any of the preceding claims, in which the sensors (26, 28) provide electrical signals in the form of pulse trains, whose frequency is indicative of the sensed speed, and the device (34, 40) receiving the signals from the sensors constitutes an electrical division circuit.

6. A combination of an engine (10) and a change-speed power transmission system as claimed in any of the preceding claims, the engine being connected to the input shaft (16) of the gearbox (18) by an operator-controlled clutch (14).

7. A combination as claimed in Claim 6, in which the engine (10) is a free-turbine type gas turbine engine.

8. A combination as claimed in Claim 6 or Claim 7, when applied for the propulsion of a land vehicle, especially a road vehicle.

## Patentansprüche

1. Gangänderungs-Kraftübertragungssystem mit einem vom Bedienenden gesteuerten, nichtsynchronen Gangänderungsgetriebe, mit Eingabe- und Abgabewellen, Sensoren (26, 28), die die Drehgeschwindigkeit der Getriebeeingabe- und -abgabewellen (16, 23) feststellen, gekennzeichnet durch eine Vorrichtung (34, 40), die so ausgelegt ist, daß sie die Signale für die festgestellte Drehgeschwindigkeit aus den Sensoren (26, 28) aufnehmen und aus diesen Signalen ein Signal ableiten, das dem Verhältnis der festgestellten Drehgeschwindigkeiten entspricht, und eine für den Bedienenden verständliche Abgabevorrichtung (36, 54), die das abgeleitete Signal (über Leitungen 35, 52) aufnimmt und dem Bedienenden eine kontinuierliche Anzeige der Beziehung zwischen dem Verhältnis der festgestellten Drehgeschwindigkeiten und den Übersetzungsverhältnissen liefert, die in dem Gangänderungs-Getriebe (18) für alle Betriebsdrehgeschwindigkeiten der Abgabewelle (24) zur Verfügung stehen.

2. System nach Anspruch 1, bei dem die Anzeige das festgestellte Verhältnis in bezug auf alle im Getriebe (18) verfügbaren Verhältnisse zeigt.

3. System nach Anspruch 2, bei dem die Abgabevorrichtung (36) einen Zeiger aufweist, der entsprechend dem festgestellten Verhältnis über eine Anzeigescheibe bewegbar ist, die (bei 38) mit allen verfügbaren Übersetzungsverhältnissen markiert ist.

4. System nach Anspruch 1, bei dem die durch die Abgabevorrichtung (54) erzielte Anzeige eine bedeutendere Ziffer oder bedeutendere Ziffern und eine weniger bedeutende Ziffer oder weniger bedeutende Ziffern aufweist, und dann, wenn das Verhältnis der festgestellten Drehgeschwindigkeiten gleich einem der verfügbaren Übersetzungsverhältnisse ist, die bedeutendere Ziffer oder diebedeutenderen Zifferndas entsprechende Übersetzungsverhältnis identifizieren, während die weniger bedeutende Ziffer oder die weniger bedeutenden Ziffern Null sind (oder fehlen), und dann, wenn das Verhältnis der festgestellten Drehgeschwindigkeiten nicht gleich einem der verfügbaren Übersetzungsverhältnisse ist, die weniger bedeutenden Ziffern eine Anzeige des Unterschiedes zwischen dem Verhältnis der festgestellten Drehgeschwindigkeiten und den am nächsten kommenden verfügbaren Übersetzungsverhältnissen ergeben.

5. System nach einem der vorausgehenden Ansprüche, bei dem die Sensoren (26, 28) elektrische Signale in Form von Impulsfolgen ergeben, deren Frequenz die festgestellte Drehgeschwindigkeit anzeigt, und daß die Vorrichtung (34, 40), die die Signale von den Sensoren aufnimmt, eine elektrische Teilerschaltung darstellt.

6. Kombination eines Motors (10) und eines Gangänderungs-Kraftübertragungssystems nach einem der vorausgehenden Ansprüche, wobei der Motor mit der Eingabewelle (16) des Getriebes (18) durch eine vom Bedienenden gesteuerte Kupplung (14) verbunden ist.

7. Kombination nach Anspruch 6, bei der der Motor (10) ein Gasturbinenmotor vom Freiturbinentyp ist.

8. Kombination nach Anspruch 6 oder 7, für den Antrieb eines Landfahrzeuges, insbes. eines Straßenfahrzeuges.

## Revendications

1. Système de transmission à changement de vitesses comportant une boîte à engrenages non synchronisés, manoeuvrée par un opérateur et pourvue d'un arbre d'entrée et d'un arbre de sortie, avec des capteurs (26, 28) pour détecter les vitesses des arbres d'entrée et de sortie (16, 24) de la boîte; caractérisé en ce qu'il comporte un dispositif (34, 40) agencé pour recevoir les signaux de vitesse émis par les capteurs (26, 28), et pour élaborer à partir de ces signaux un signal résultant, qui représente le rapport des vitesses surveillées par les capteurs; et un dispositif de sortie (36, 54) intelligible par l'opérateur, agencé pour recevoir le signal résultant (par des lignes 35, 52), et pour fournir en permanence à l'opérateur une indication des valeurs relatives du rapport des vitesses surveillées par les capteurs et des rapports d'engrenages permis par la boîte de changement de vitesses à engrenages (18), pour toute la plage des vitesses de fonctionnement de l'arbre de sortie (24) de la boîte de vitesses.

2. Système selon la revendication 1, caractérisé en ce que l'indicateur fournit une indication du rapport des vitesses surveillées en se référant aux rapports d'engrenages permis par la boîte de vitesses (18).

3. Système selon la revendication 2, caractérisé en ce que le dispositif de sortie (36) comporte une aiguille mobile suivant le rapport des vitesses surveillées par les capteurs, cette aiguille se déplaçant en regard d'un cadran portant des indications (38) qui correspondant à toutes les valeurs de rapports d'engrenages permises par la boîte de vitesses.

4. Système selon la revendication 1, caractérisé en ce que l'indication fournie par le dispositif de sortie (54) comporte une partie significative, formée d'un ou plusieurs chiffres, et une autre partie secondaire de moindre importance formée d'un ou plusieurs chiffres; en ce que, lorsque le rapport des vitesses surveillées est égal à l'un des rapports d'engrenages de la boîte, la partie significative indique le rapport d'engrenages correspondant, la partie secondaire de l'indication étant alors nulle (ou absente); et en ce que, lorsque le rapport des vitesses surveillées est différent de toutes les valeurs des rapports d'engrenages de la boîte, la partie secondaire de l'indication numérique indique la différence existant entre le rapport des vitesses surveillées, et la valeur la plus proche parmi les rapports d'engrenages de la boîte de vitesses.

5. Système selon l'une des revendications 1 à 4, caractérisé en ce que les capteurs (26, 28) produisent des signaux électriques, constitués par des trains d'impulsions, à une fréquence qui indique la valeur de la vitesse correspondante en cause; et en ce que le dispositif (34, 40) qui reçoit les signaux provenant des capteurs constitue un circuit de division électrique.

6. Combinaison d'un moteur (10) et d'un système de transmission à changement de vitesses selon l'une des revendications 1 à 5, caractérisée en ce que le moteur est relié à l'arbre d'entrée (16) de la boîte de vitesses à engrenages (18), par l'intermédiaire d'un embrayage (14) actionné par l'opérateur.

7. Combinaison selon la revendication 6, caractérisée en ce que le moteur (10) est un moteur à turbine à gaz, à turbine libre.

8. Combinaison selon l'une des revendications 6 ou 7, caractérisée en ce qu'elle est appliquée à la propulsion d'un véhicule terrestre, tel qu'un véhicule routier.

$N_{DS}$

$\dfrac{N_{TI}}{N_{DS}}$

10:1

1:1

V

30

29

33

28

24

18

22

20

34

$\div$

35

27

31

30

26

16

14

12

10

64

60

58

62

56

38

36

1

2

3

4

5

V

$N_{TI}$

V

*Fig-1*

FIG-2